# EUROPEAN PATENT APPLICATION

(11) **EP 4 576 415 A2**
(43) Date of publication of application: **25.06.2025**
(21) Application number: 23907757.1
(22) Date of filing: 20.12.2023
(51) Int. Cl.: H01M 50/691, H01M 50/107, H01M 50/289, H01M 50/249, H01M 50/213

(54) **APPARATUS FOR CLEANING CYLINDRICAL BATTERY CELL AND CYLINDRICAL BATTERY CELL PRODUCED USING SAME, AND BATTERY PACK AND VEHICLE COMPRISING CYLINDRICAL BATTERY CELL**

(30) Priority: 20.12.2022 KR 20220179855; 19.12.2023 KR 20230185491
(71) Applicant: LG Energy Solution, Ltd., Seoul 07335 (KR)
(72) Inventor: KIM, Tae-Heon, Daejeon 34122 (KR); KIM, Geon-Woo, Daejeon 34122 (KR); LEE, Gi-Yeon, Daejeon 34122 (KR); LEE, Gil-Young, Daejeon 34122 (KR)
(74) Representative: Goddar, Heinz J.
(86) International application number: PCT/KR2023/021155
(87) International publication number: WO 2024/136474

(57) **Abstract**

Disclosed are a cylindrical battery cell cleaning device, a cylindrical battery cell produced using the same, and a battery pack and a vehicle including the cylindrical battery cell. A cylindrical battery cell cleaning device according to an embodiment of the present disclosure includes a rotating member coupled to a cell carrier on which a cylindrical battery cell is seated and rotating by being coupled to a rotating shaft; a fixing member disposed on the outside of the rotating member and in contact with the cell carrier so that the cell carrier rotates in conjunction with the rotation of the rotating member when the rotating member rotates; and a spraying member that sprays cleaning water toward the cylindrical battery cell seated on the cell carrier.

## Description

### TECHNICAL FIELD

The present application claims priority to Korean Patent Application No. 10-2022-0179855 filed on December 20, 2022 and Korean Patent Application No. 10-2023-0185491 filed on December 19, 2023 in the Republic of Korea, the disclosures of which are incorporated herein by reference.

The present disclosure relates to a cylindrical battery cell cleaning device, a cylindrical battery cell produced using the same, and a battery pack and a vehicle including the cylindrical battery cell, and more specifically, to a cylindrical battery cell cleaning device capable of sufficiently cleaning cylindrical battery cells of various sizes, a cylindrical battery cell produced using the same, and a battery pack and a vehicle including the cylindrical battery cell.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources.

Such secondary batteries are attracting attention as a new energy source to improve eco-friendliness and energy efficiency in that it has not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of this unit secondary battery cell is about 2.5 V to 4.5 V.

Therefore, when a higher output voltage is required, a plurality of battery cells may be connected in series to configure a battery module or a battery pack. In addition, depending on the demanded charge/discharge capacity, a plurality of battery cells may also be connected in parallel to configure a battery module or a battery pack. Thus, the number and electrical connection type of battery cells included in the battery module or the battery pack may be variously set depending on at least one of the required output voltage and the demanded charge/discharge capacity.

Cylindrical, prismatic, and pouch-type battery cells are known as types of secondary battery cells. In the case of a cylindrical battery cell, a separator, which is an insulator, is interposed between the positive electrode plate and the negative electrode plate and wound to form a jelly roll-shaped electrode assembly, which is then inserted into a battery can together with an electrolyte to form a battery. And, in the cylindrical battery cell, a current collector plate may be used to electrically connect the positive electrode plate and the negative electrode plate, respectively.

Meanwhile, a cylindrical battery cell goes through various processes in the production process, and particularly, a cleaning process is performed.

In the prior art, when a cylindrical battery cell is cleaned while moving, the cleaning water does not reach it, resulting in a dead part that is not cleaned, and accordingly, there is a problem in that sufficient cleaning is not performed.

### DISCLOSURE

### Technical Problem

The present disclosure is designed to solve the problems of the related art, and therefore the present disclosure is directed to providing a cylindrical battery cell cleaning device capable of sufficiently cleaning a cylindrical battery cell, a cylindrical battery cell produced using the same, and a battery pack and a vehicle including the cylindrical battery cell.

The present disclosure is also directed to providing a cylindrical battery cell cleaning device capable of maintaining cleaning power even for cylindrical battery cells of various sizes, a cylindrical battery cell produced using the same, and a battery pack and a vehicle including the cylindrical battery cell.

However, technical problems to be solved by the present disclosure are not limited to the above-described problems, and other problems not mentioned herein may be clearly understood by those skilled in the art from the following description of the present disclosure.

### Technical Solution

According to one aspect of the present disclosure, there may be provided a cylindrical battery cell cleaning device including a rotating member coupled to a cell carrier on which a cylindrical battery cell is seated and rotating by being coupled to a rotating shaft; a fixing member disposed on the outside of the rotating member and in contact with the cell carrier so that the cell carrier rotates in conjunction with the rotation of the rotating member when the rotating member rotates; and a spraying member that sprays cleaning water toward the cylindrical battery cell seated on the cell carrier.

In an embodiment, the rotating member may include a first member supporting the bottom portion of the cell carrier; and a second member supporting the side surface of the cell carrier.

In an embodiment, the first member may have a first recessed portion formed to be inwardly recessed in the circumferential portion of the first member so that the cleaning water sprayed from the spraying member may be discharged.

In an embodiment, a discharge hole may be formed in the bottom portion of the cell carrier, a recessed groove may be formed in the first recessed portion, and the discharge hole and the recessed groove may communicate with each other.

In an embodiment, the second member may have a second recessed portion formed to be inwardly recessed in the circumferential portion of the second member so that the cell carrier may be coupled thereto.

In an embodiment, a recessed groove may be formed in the second recessed portion, and the side surface of the cell carrier may be inserted into and supported by the recessed groove.

In an embodiment, the cell carrier may have a circular outermost cross-section, so that one side may be inserted into the second recessed portion and the other side may be in contact with the fixing member, and the cell carrier may rotate along the contact surface of the fixing member when the rotating member rotates.

In an embodiment, a friction providing portion may be formed on the contact surface of the fixing member.

In an embodiment, the friction providing portion may include at least one O-ring coupled to the contact surface along the contact surface of the fixing member.

In an embodiment, the O-ring may be made of rubber.

In an embodiment, a carrier support portion may be coupled to the rotating member to support the rotating cell carrier.

In an embodiment, the carrier support portion may be in contact with the cell carrier at a lower side of the cell carrier.

In an embodiment, the carrier support portion may be provided as a bearing.

In an embodiment, the bearing may be made of a poly ether ether ketone (PEEK) material.

In an embodiment, the first recessed portion may be in plurality, and the carrier support portion may be coupled to the first member between any one of the plurality of first recessed portions and another neighboring first recessed portion.

In an embodiment, the cell carrier may rotate in a direction opposite to the rotation direction of the rotating member when the rotating member rotates.

In an embodiment, the spraying member may include at least one spraying nozzle disposed to face the cylindrical battery cell seated on the cell carrier.

Meanwhile, according to another aspect of the present disclosure, there may be provided a cylindrical battery cell produced using the cylindrical battery cell cleaning device described above, there may also be provided a battery pack including at least one cylindrical battery cell described above, and there may also be provided a vehicle including at least one cylindrical battery cell described above.

### Advantageous Effects

Embodiments of the present disclosure have the effect of sufficiently cleaning a cylindrical battery cell because a cell carrier on which the cylindrical battery cell is seated moves while rotating.

In addition, there is an effect of enabling to maintain cleaning power even for cylindrical battery cells of various sizes.

However, the effects to be obtained by the present disclosure are not limited to the above-described effects, and other technical effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a view schematically showing the interior of a cylindrical battery cell cleaning device according to an embodiment of the present disclosure.
FIG. 2 is a schematic partial perspective view of a cylindrical battery cell cleaning device according to an embodiment of the present disclosure.
FIG. 3 is an enlarged view of a state in which a cell carrier with a battery cell seated is coupled to a rotating member in a cylindrical battery cell cleaning device according to an embodiment of the present disclosure.
FIG. 4 is a partial plan view of a cylindrical battery cell cleaning device according to an embodiment of the present disclosure.
FIGS. 5 and 6 are views showing a process in which a cell carrier moves while rotating by a rotating member in a cylindrical battery cell cleaning device according to an embodiment of the present disclosure, and a second member of the rotating member is omitted.
FIG. 7 is a view showing a state in which a friction providing portion is formed on the contact surface of a fixing member in a cylindrical battery cell cleaning device according to an embodiment of the present disclosure.
FIG. 8 is a view showing the bottom surface of a rotating member in a cylindrical battery cell cleaning device according to an embodiment of the present disclosure, and shows a state in which a first member supports the bottom portion of a cell carrier.
FIG. 9 is view schematically showing the configuration of a battery pack including cylindrical battery cells produced using a cylindrical battery cell cleaning device according to each embodiment of the present disclosure.
FIG. 10 is a view for describing a vehicle including the battery pack of FIG. 9.

### BEST MODE

Hereinafter, preferred embodiments of the present disclosure will be described in detail with reference to the accompanying drawings. The terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments described in this specification and the configurations shown in the drawings are only one of the most preferred embodiments of the present disclosure, not intended to entirely represent the technical aspects of the present disclosure, so it should be understood that various equivalents and modifications may be made thereto at the time of filing the present application.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

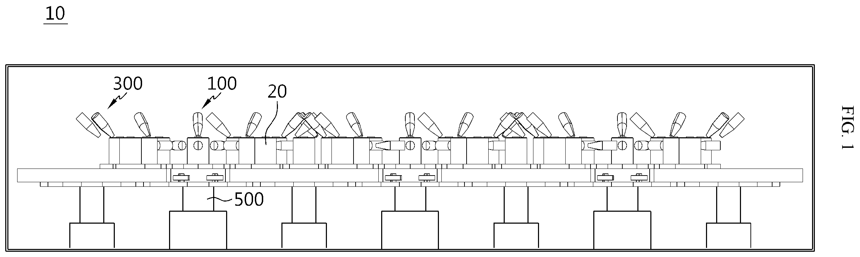

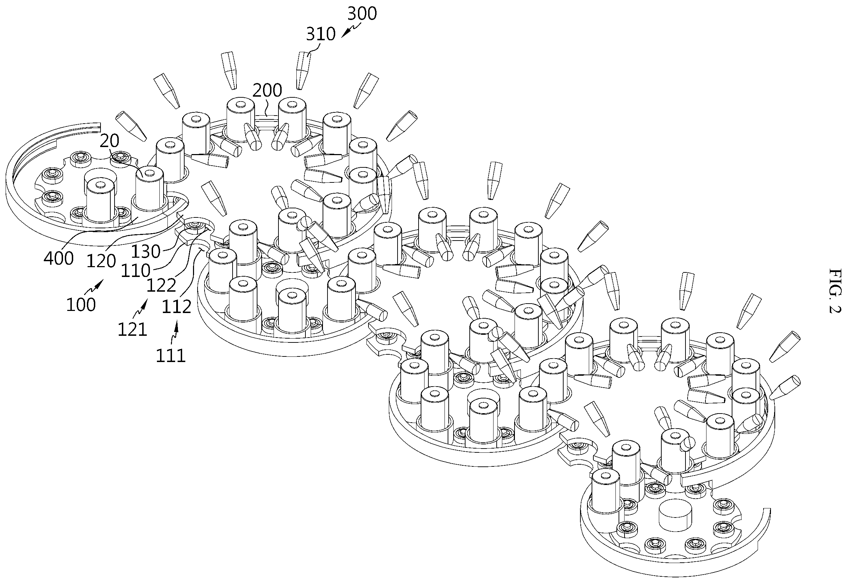

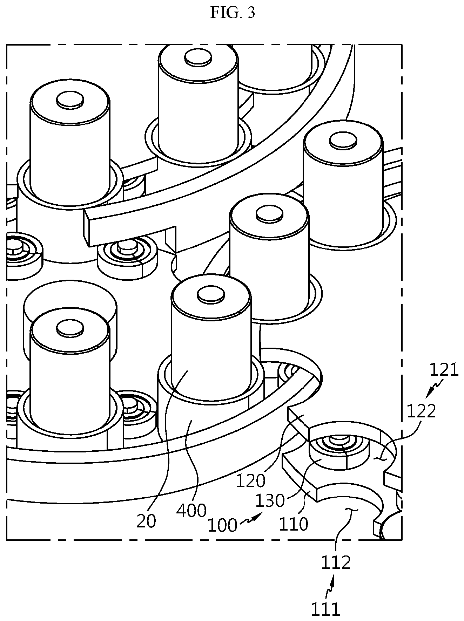

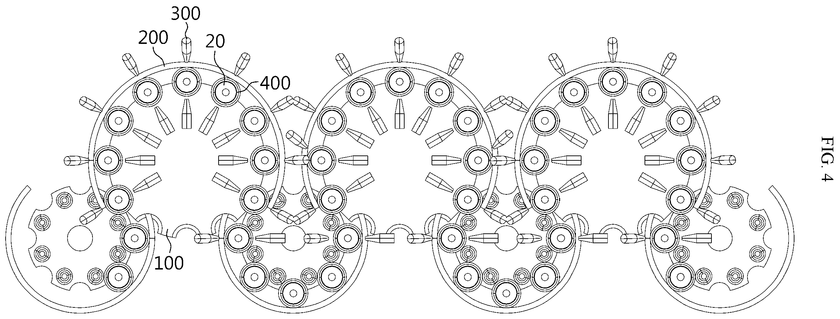

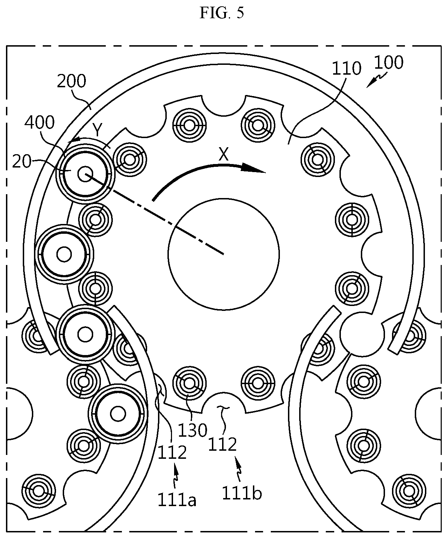

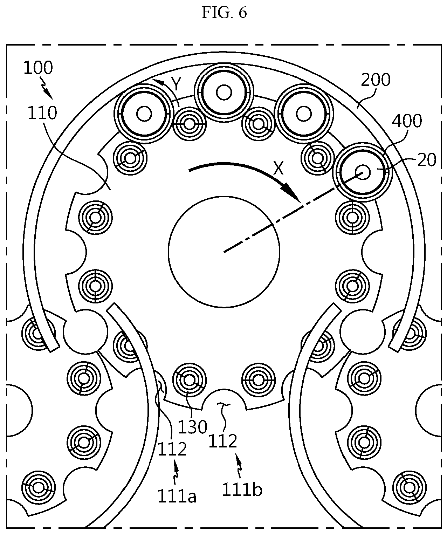

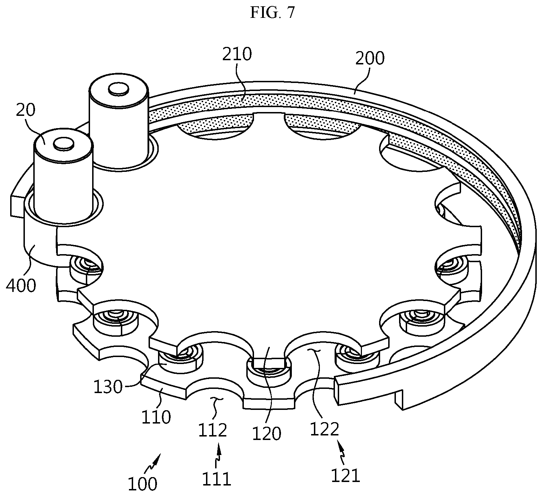

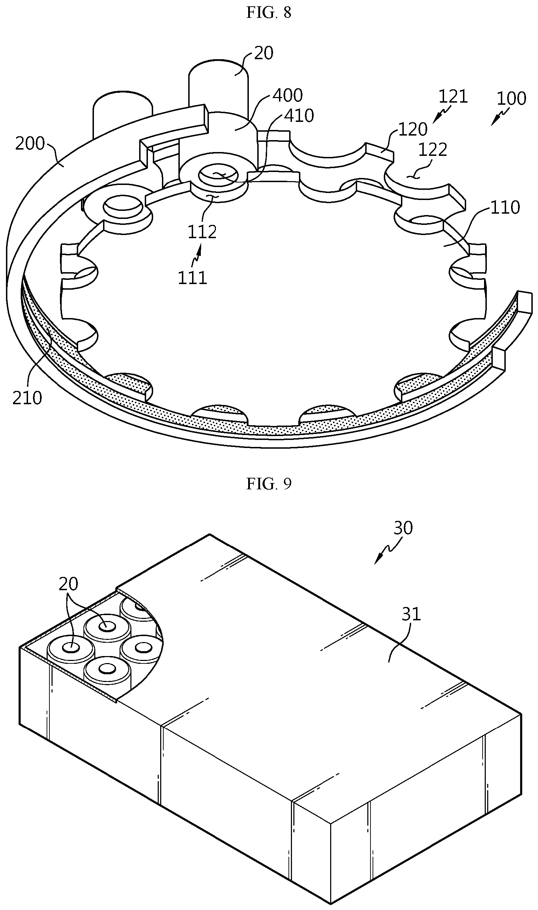

FIG. 1 is a view schematically showing the interior of a cylindrical battery cell cleaning device according to an embodiment of the present disclosure, FIG. 2 is a schematic partial perspective view of a cylindrical battery cell cleaning device according to an embodiment of the present disclosure, FIG. 3 is an enlarged view of a state in which a cell carrier with a battery cell seated is coupled to a rotating member in a cylindrical battery cell cleaning device according to an embodiment of the present disclosure, FIG. 4 is a partial plan view of a cylindrical battery cell cleaning device according to an embodiment of the present disclosure, FIGS. 5 and 6 are views showing a process in which a cell carrier moves while rotating by a rotating member in a cylindrical battery cell cleaning device according to an embodiment of the present disclosure, and a second member of the rotating member is omitted, FIG. 7 is a view showing a state in which a friction providing portion is formed on the contact surface of a fixing member in a cylindrical battery cell cleaning device according to an embodiment of the present disclosure, and FIG. 8 is a view showing the bottom surface of a rotating member in a cylindrical battery cell cleaning device according to an embodiment of the present disclosure, and shows a state in which a first member supports the bottom portion of a cell carrier.

The cylindrical battery cell cleaning device 10 according to an embodiment of the present disclosure is a device for cleaning a cylindrical battery cell 20 with cleaning water during a manufacturing process of the cylindrical battery cell 20.

Here, the cylindrical battery cell 20 may include an electrode assembly, a battery can, and a cap plate.

The electrode assembly has a structure in which a positive electrode plate, a negative electrode plate, and a separator interposed between the positive electrode plate and the negative electrode plate are wound in one direction. And, a center hole is formed in the center of the electrode assembly and the electrode assembly may be formed in a jelly roll type.

For example, the electrode assembly may be manufactured by winding a laminate formed by sequentially stacking a negative electrode plate, a separator, a positive electrode plate, and a separator at least once. Here, the positive electrode plate and the negative electrode plate may be formed in a sheet shape.

That is, the electrode assembly applied to this embodiment may be a winding type electrode assembly. In this case, an additional separator may also be provided on the outer circumferential surface of the electrode assembly for insulation from the battery can. That is, the electrode assembly may have a winding structure well known in the related art without limitation.

A positive electrode active material may be applied to one or both sides of the positive electrode plate, and a first uncoated portion to which no positive electrode active material is applied may be formed at an end of the positive electrode plate. The first uncoated portion is exposed to the outside of the separator while forming a plurality of winding turns around the center of the electrode assembly, and may itself be used as an electrode tab. However, the first uncoated portion may not be formed on the positive electrode plate.

A negative electrode active material may be applied to one or both sides of the negative electrode plate, and a second uncoated portion to which no negative electrode active material is applied may be formed at an end of the negative electrode plate. The second uncoated portion is exposed to the outside of the separator while forming a plurality of winding turns around the center of the electrode assembly, and may itself be used as an electrode tab. However, the second uncoated portion may not be formed on the negative electrode plate.

Here, when the positive electrode plate and the negative electrode plate each include an uncoated portion, the first uncoated portion and the second uncoated portion may be configured to face opposite directions.

And, the positive electrode active material coated on the positive electrode plate and the negative electrode active material coated on the negative electrode plate may be used without limitation so long as they are active materials known in the art.

The separator may be a porous polymer film, for example, a porous polymer film made of a polyolefin-based polymer such as ethylene homopolymer, propylene homopolymer, ethylene/butene copolymer, ethylene/hexene copolymer, and ethylene/ methacrylate copolymer, either alone or in a stacked structure thereof.

As another example, the separator may be a conventional porous nonwoven fabric, for example, a nonwoven fabric made of high melting point glass fiber, polyethylene terephthalate fiber, and the like.

At least one surface of the separator may include a coating layer of inorganic particles. In addition, the separator itself may be formed of a coating layer of inorganic particles. The particles constituting the coating layer may have a structure coupled to a binder so that an interstitial volume exists between adjacent particles.

And, the center hole of the electrode assembly is also used for welding the cell terminal (positive electrode terminal) and the positive electrode current collector plate. That is, it may be configured to weld the cell terminal and the positive electrode current collector plate by irradiating a laser through the center hole of the electrode assembly.

An electrode assembly is accommodated in the battery can. And, a through hole may be formed in the battery can. Here, the battery can is formed in a cylindrical shape such that the electrode assembly is accommodated inside the battery can and may be electrically connected to the negative electrode plate of the electrode assembly. Accordingly, the battery can may have the same polarity as the negative electrode plate, that is, the negative electrode.

The diameter of the battery can is formed to be larger than the diameter of the electrode assembly. A gap of a preset size is formed between the battery can and the positive electrode current collector plate, and an insulator may be interposed between the gap.

If the size of the battery can is set according to the standard and then the size of the electrode assembly is increased, the overall capacity of the cylindrical battery cell increases, but the gap between the battery can and the electrode assembly decreases.

That is, since increasing the size of the electrode assembly to increase the overall capacity of the cylindrical battery cell reduces the gap between the battery can and the electrode assembly, the insulator should be able to be interposed between the reduced gap of the battery can and the electrode assembly to increase the capacity of the cylindrical battery cell, and to this end, the thickness of the insulator is preferably as thin as possible.

A battery can is an approximately cylindrical receptor, which may be made of a conductive material such as metal, for example. The material of the battery can may be made of a conductive metal, such as aluminum, steel, stainless steel, or the like, but is not limited thereto.

The positive electrode current collector plate is electrically connected to the positive electrode plate, for example, at the top of the electrode assembly. For example, the positive electrode current collector plate is made of a conductive metal material and may be electrically connected to the first uncoated portion of the positive electrode plate.

The cell terminal is made of a conductive metal material and is electrically connected to the positive electrode current collector plate. And, the cell terminal is electrically connected to the positive electrode plate of the electrode assembly through the positive electrode current collector plate, and has a positive polarity.

That is, the cell terminal may function as a positive electrode terminal. And, the battery can is electrically connected to the negative electrode plate of the electrode assembly as described above, and may have a negative polarity.

The negative electrode current collector plate is electrically connected to the negative electrode plate, for example, at the bottom of the electrode assembly. For example, the negative electrode current collector plate is made of a conductive metal material such as aluminum, steel, copper, nickel, or the like and may be electrically connected to the second uncoated portion of the negative electrode plate.

The negative electrode current collector plate may be electrically connected to the battery can. To this end, the negative electrode current collector plate may be secured with at least a portion of its edge part interposed between the inner surface of the battery can and the sealing gasket.

In an embodiment, at least a portion of the edge part of the negative electrode current collector plate may be secured to the beading portion by welding while being supported on the bottom surface of the beading portion formed at the bottom of the battery can.

And, at least a portion of the remaining part except for the coupling part of the beading portion of the negative electrode current collector plate may be coupled to the bent surface of the second uncoated portion by welding, for example, laser welding.

In addition, at least a portion of the edge of the negative electrode current collector plate may be electrically coupled to a surface adjacent to the clamping portion among the upper and lower surfaces of the beading portion.

The cap plate is configured to seal an opening formed at the bottom of the battery can. The cap plate may be made of, for example, a metal material to ensure rigidity.

And, the cap plate may be separated from the electrode assembly and provided to be non-polar. That is, the cap plate may not have a polarity even when it is made of a conductive metal material.

The fact that the cap plate has no polarity means that the cap plate is electrically insulated from the battery can and cell terminals. As such, the cap plate need not be polarized, and its material does not necessarily have to be a conductive metal.

The cap plate may be supported by being seated on a beading portion formed on the battery can. In addition, the cap plate is secured by a clamping portion to be described later. A sealing gasket may be interposed between the cap plate and the clamping portion of the battery can to ensure airtightness of the battery can. That is, the sealing gasket may be provided to be interposed between the edge of the cap plate and the opening of the battery can.

Referring to FIGS. 1 and 2, the cylindrical battery cell cleaning device 10 according to an embodiment of the present disclosure includes a rotating member 100, a fixing member 200, and a spraying member 300.

The rotating member 100 is configured to rotate by being coupled to a rotating shaft 500. And, a cell carrier 400 on which the cylindrical battery cell 20 is seated is coupled to the rotating member 100. That is, when the rotating member 100 rotates, the cell carrier 400 coupled to the rotating member 100 moves in the rotation direction of the rotating member 100. And, the cylindrical battery cell 20 seated on the cell carrier 400 moves together with the cell carrier 400.

Referring to FIGS. 2 and 3, the rotating member 100 may include a first member 110 and a second member 120. For example, the first member 110 may be located below the second member 120, and the second member 120 may be located above the first member 110.

Referring to FIG. 8, the first member 110 supports the bottom portion of the cell carrier 400. The first member 110 may have a first recessed portion 111 formed to be inwardly recessed in the circumferential portion of the first member 110 so that the cleaning water sprayed from the spraying member 300 may be discharged.

For example, a recessed groove 112 may be formed in the first recessed portion 111, and when a discharge hole 410 is formed in the bottom portion of the cell carrier 400, the recessed groove 112 of the first recessed portion 111 and the discharge hole 410 of the bottom portion of the cell carrier 400 may be configured to communicate with each other. Accordingly, the cleaning water sprayed from the spraying member 300 may be discharged downward through the discharge hole 410 and the recessed groove 112.

Referring to FIGS. 2 and 3 again, the second member 120 supports the side surface of the cell carrier 400. The second member 120 may have a second recessed portion 121 formed to be inwardly recessed in the circumferential portion of the second member 120 so that the cell carrier 400 may be coupled thereto.

Here, for example, the recessed groove 122 may be formed in the second recessed portion 121, and the side surface of the cell carrier 400 may be inserted into and supported by the recessed groove 122.

Referring to FIG. 4, the fixing member 200 is configured to be disposed on the outside of the rotating member 100 and in contact with the cell carrier 400 so that the cell carrier 400 rotates in conjunction with the rotation of the rotating member 100 when the rotating member 100 rotates.

That is, the fixing member 200 is formed to have a diameter larger than the rotating member 100 and is disposed on the outside the rotating member 100. Here, the fixing member 200 may be disposed to surround the entire rotating member 100, or may be disposed to surround only a portion of the rotating member 100.

Referring to FIG. 7, a friction providing portion 210 may be formed on the contact surface of the fixing member 200. The friction providing portion 210 provides friction to the cell carrier 400 to allow the cell carrier 400 to rotate.

Here, the friction providing portion 210 may include at least one O-ring coupled to the contact surface along the contact surface of the fixing member 200. And, for example, the O-ring may be made of rubber, but the material of the O-ring is not limited thereto.

And, referring to FIG. 7, the cell carrier 400 may have an outermost cross-section, for example, formed in a circular shape. In this case, one side of the cell carrier 400 is inserted into the second recessed portion 121, and the other side is in contact with the fixing member 200. And, when the rotating member 100 rotates, the cell carrier 400 rotates along the contact surface of the fixing member 200.

That is, the cell carrier 400 has the bottom portion supported by the first recessed portion 111 of the rotating member 100 (see FIG. 8) and is inserted into the recessed groove 122 of the second recessed portion 121 (see FIG. 7). And, as shown in FIGS. 5 and 6 (for convenience of description, the second member 120 is omitted in FIGS. 5 and 6), when the rotating member 100 rotates in the direction of arrow X, the cell carrier 400 moves in the rotation direction of the rotating member 100 and contacts the fixing member 200 as described above.

Here, since the friction providing portion 210 is formed on the contact surface of the fixing member 200, the part of the cell carrier 400 that is in contact with the friction providing portion 210 of the fixing member 200 is to stop, but the part of the cell carrier 400 that is inserted into the recessed groove 122 of the second recessed portion 121 receives a rotational force in the direction of arrow X of the rotating member 100, and thus the cell carrier 400 rotates in the direction of arrow Y, which is opposite to the rotation direction of the rotating member 100 when the rotating member 100 rotates.

That is, in FIGS. 5 and 6, when the rotating member 100 rotates in the direction of arrow X, which is clockwise, the cell carrier 400 rotates in the direction of arrow Y, which is counterclockwise, and the cylindrical battery cell 20 seated on the cell carrier 400 also rotates in the direction of arrow Y, which is counterclockwise.

And, if the spraying member 300 (see FIG. 2) sprays cleaning water toward the cylindrical battery cell 20 when the cylindrical battery cell 20 moves while rotating in this way, there is an effect of sufficiently cleaning the cylindrical battery cell 20 as a whole.

In addition, since the cylindrical battery cell 20 is cleaned while rotating, there is no dead part that is not cleaned, and therefore, the cylindrical battery cell 20 may be sufficiently cleaned as a whole even if the size of the cylindrical battery cell 20 changes. Accordingly, there is an effect of maintaining cleaning power even for cylindrical battery cells 20 of various sizes.

The carrier support portion 130 may be coupled to the rotating member 100 to support a rotating cell carrier 400. Referring to FIG. 3, the carrier support portion 130 may be in contact with the cell carrier 400 at a lower side of the cell carrier 400. And, referring to FIG. 5, the carrier support portion 130 may contact a plurality of surfaces of the cell carrier 400, for example, four surfaces, to support the cell carrier 400, but is not limited thereto.

The carrier support portion 130 may be diverse and may be provided as a bearing, for example. Here, the bearing may be made of a poly ether ether ketone (PEEK) material, but is not limited thereto. When the bearing is made of a poly ether ether ketone material, it is a thermoplastic resin with high strength, high rigidity, and excellent heat resistance, which has the effect of facilitating molding processing.

Referring to FIG. 5, the first recessed portion 111 may be in plurality, and the carrier support portion 130 may be coupled to the first member 110 between one first recessed portion 111a of the plurality of first recessed portions 111a, 111b and the other neighboring first recessed portion 111b.

Accordingly, there is an effect that the cell carrier 400 may be smoothly rotated by the carrier support portion 130.

Referring to FIG. 2, the spraying member 300 is configured to spray cleaning water toward the cylindrical battery cell 20 seated on the cell carrier 400. Here, the spraying member 300 may include at least one spraying nozzle 310 disposed to face the cylindrical battery cell 20 seated on the cell carrier 400, but is not limited thereto.

When a plurality of spraying nozzles 310 are disposed in a horizontal or inclined direction, there is an effect of spraying cleaning water to various parts of the cylindrical battery cell 20.

FIG. 9 is view schematically showing the configuration of a battery pack including cylindrical battery cells 20 produced using a cylindrical battery cell cleaning device 10 according to each embodiment of the present disclosure.

Referring to FIG. 9, a battery pack 30 according to an embodiment of the present disclosure may include one or more cylindrical battery cells 20. Here, the cylindrical battery cell 20 is produced using the cylindrical battery cell cleaning device 10 according to each embodiment of the present disclosure as described above.

In addition, the battery pack 30 may further include a pack housing 31 for accommodating the cylindrical battery cell 20, various devices for controlling charge/ discharge of the cylindrical battery cell 20, such as a BMS, a current sensor, a fuse, and the like.

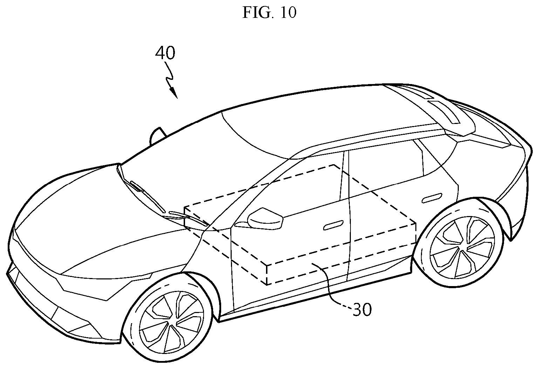

FIG. 10 is a view for describing a vehicle including the battery pack of FIG. 9.

Referring to FIG. 10, a vehicle 40 according to an embodiment of the present disclosure may include one or more cylindrical battery cells 20 or battery packs 30. The cylindrical battery cell 20 is produced using the cylindrical battery cell cleaning device 10 according to each embodiment of the present disclosure as described above. And, the battery pack 30 may include one or more cylindrical battery cells 20 as described above.

Here, the vehicle 40 includes various vehicles designed to use electricity, such as electric vehicles or hybrid vehicles.

The terms indicating directions as used herein such as upper, lower, left, and right are used for convenience of description only, and it is obvious to those skilled in the art that the term may change depending on the position of the stated element or an observer.

While the present disclosure has been described hereinabove with reference to a limited number of embodiments and drawings, the present disclosure is not limited thereto and it is obvious to those skilled in the art that a variety of modifications and changes may be made thereto within the technical aspects of the present disclosure and the equivalent scope of the appended claims. Therefore, the embodiments disclosed above should be considered from an illustrative perspective rather than a limiting perspective. That is, the scope of the true technical idea of the present disclosure is shown in the claims, and all differences within the scope of equivalents should be construed as being included in the present disclosure.

### INDUSTRIAL APPLICABILITY

The present disclosure relates to a cylindrical battery cell cleaning device, a cylindrical battery cell produced using the same, and a battery pack and a vehicle including the cylindrical battery cell, and is particularly applicable to industries related to secondary batteries.

## Claims

1. A cylindrical battery cell cleaning device, comprising:
a rotating member coupled to a cell carrier on which a cylindrical battery cell is seated and rotating by being coupled to a rotating shaft;
a fixing member disposed on the outside of the rotating member and in contact with the cell carrier so that the cell carrier rotates in conjunction with the rotation of the rotating member when the rotating member rotates; and
a spraying member that sprays cleaning water toward the cylindrical battery cell seated on the cell carrier.

2. The cylindrical battery cell cleaning device according to claim 1,
wherein the rotating member comprises:
a first member supporting the bottom portion of the cell carrier; and
a second member supporting the side surface of the cell carrier.

3. The cylindrical battery cell cleaning device according to claim 2,
wherein the first member has a first recessed portion formed to be inwardly recessed in the circumferential portion of the first member so that the cleaning water sprayed from the spraying member may be discharged.

4. The cylindrical battery cell cleaning device according to claim 3,
wherein a discharge hole is formed in the bottom portion of the cell carrier, a recessed groove is formed in the first recessed portion, and the discharge hole and the recessed groove communicate with each other.

5. The cylindrical battery cell cleaning device according to claim 2,
wherein the second member has a second recessed portion formed to be inwardly recessed in the circumferential portion of the second member so that the cell carrier may be coupled thereto.

6. The cylindrical battery cell cleaning device according to claim 5,
wherein a recessed groove is formed in the second recessed portion, and the side surface of the cell carrier is inserted into and supported by the recessed groove.

7. The cylindrical battery cell cleaning device according to claim 5,
wherein the cell carrier has a circular outermost cross-section, so that one side is inserted into the second recessed portion and the other side is in contact with the fixing member, and
the cell carrier rotates along the contact surface of the fixing member when the rotating member rotates.

8. The cylindrical battery cell cleaning device according to claim 7,
wherein a friction providing portion is formed on the contact surface of the fixing member.

9. The cylindrical battery cell cleaning device according to claim 8,
wherein the friction providing portion comprises at least one O-ring coupled to the contact surface along the contact surface of the fixing member.

10. The cylindrical battery cell cleaning device according to claim 9,
wherein the O-ring is made of rubber.

11. The cylindrical battery cell cleaning device according to claim 3,
wherein a carrier support portion is coupled to the rotating member to support the rotating cell carrier.

12. The cylindrical battery cell cleaning device according to claim 11,
wherein the carrier support portion is in contact with the cell carrier at a lower side of the cell carrier.

13. The cylindrical battery cell cleaning device according to claim 11,
wherein the carrier support portion is provided as a bearing.

14. The cylindrical battery cell cleaning device according to claim 13,
wherein the bearing is made of a poly ether ether ketone (PEEK) material.

15. The cylindrical battery cell cleaning device according to claim 11,
wherein the first recessed portion is in plurality, and
the carrier support portion is coupled to the first member between any one of the plurality of first recessed portions and another neighboring first recessed portion.

16. The cylindrical battery cell cleaning device according to claim 1,
wherein the cell carrier rotates in a direction opposite to the rotation direction of the rotating member when the rotating member rotates.

17. The cylindrical battery cell cleaning device according to claim 1,
wherein the spraying member comprises at least one spraying nozzle disposed to face the cylindrical battery cell seated on the cell carrier.

18. A cylindrical battery cell produced using a cylindrical battery cell cleaning device according to any one of claims 1 to 17.

19. A battery pack comprising at least one cylindrical battery cell according to claim 18.

20. A vehicle comprising at least one cylindrical battery cell according to claim 18.
